# EUROPEAN PATENT APPLICATION

(11) **EP 4 625 948 A2**
(43) Date of publication of application: **01.10.2025**
(21) Application number: 23907888.4
(22) Date of filing: 22.12.2023
(51) Int. Cl.: H04L 67/75, H04L 67/52, H04W 8/00, H04W 48/20, H04W 84/12

(54) **ELECTRONIC DEVICE FOR CONTROLLING ONBOARDING, AND OPERATION METHOD THEREOF**

(30) Priority: 23.12.2022 KR 20220183512; 01.02.2023 KR 20230013806
(71) Applicant: Samsung Electronics Co., Ltd., Suwon-si, Gyeonggi-do 16677 (KR)
(72) Inventor: KIM, Namjin, Suwon-si, Gyeonggi-do 16677 (KR); KIM, Hyunjoong, Suwon-si, Gyeonggi-do 16677 (KR); KIM, Jonghwan, Suwon-si, Gyeonggi-do 16677 (KR); PARK, Jongho, Suwon-si, Gyeonggi-do 16677 (KR); SHIN, Moohyun, Suwon-si, Gyeonggi-do 16677 (KR); YUN, Chaeyoung, Suwon-si, Gyeonggi-do 16677 (KR); LEE, Kanghee, Suwon-si, Gyeonggi-do 16677 (KR)
(74) Representative: Gulde & Partner
(86) International application number: PCT/KR2023/021479
(87) International publication number: WO 2024/136605

(57) **Abstract**

According to one embodiment, an electronic device may comprise: a communication circuit; a processor, and memory (130 in figure 1; and 206 in figure 2). The memory may store instructions which, when executed by the processor, cause the electronic device to: search for an external electronic device through a peripheral device search; determine whether the external electronic device belongs to the same user as the electronic device or is an in-house device; on the basis of a determination result, display a pop-up display for onboarding the external electronic device to a cloud; identify the connection type of the external electronic device in response to a user input on the pop-up display; and determine location information of the external electronic device according to the connection type of the external electronic device.

## Description

### [Technical Field]

The disclosure relates to an electronic device for controlling onboarding of an external electronic device and an operation method thereof.

### [Background Art]

Internet of Things (IoT) refers to technology that connects, to the Internet, various objects including sensors and a communication function embedded therein.

IoT is artificial intelligent technology in which objects connected over the Internet exchange data, analyze and learn information by themselves, and provide the information to users, or users remotely control them. Here, the objects may be various embedded systems such as home appliances, mobile equipment, wearable devices, or the like. Objects connected to IoT may need to be connected over the Internet by using unique IPs that identify them, and may need to contain embedded sensors for obtaining data from an external environment.

IoT may be highly utilized for the purpose of controlling various electronic devices in homes. Users may perform control so that electronic devices such as TVs, washing machines, air conditioners, or the like in in-home IoT environments perform specific services, respectively, and may share information thereon.

### [Detailed Description of the Invention]

### [Technical Solution]

According to an embodiment, an electronic device may include a communication circuit, a processor, and memory. The memory may store instructions which, when executed by the processor, cause the electronic device to search for an external electronic device via a peripheral device search, and determine whether the external electronic device belongs to the same user of the electronic device, or is an indoor device, to display, based on a result of the determination, a popup display to onboard the external electronic device to a cloud, to identify a connection type of the external electronic device in response to a user input to the popup display, and to determine location information of the external electronic device based on the connection type of the external electronic device.

According to an embodiment, an operation method of an electronic device may include an operation of searching for an external electronic device via a peripheral device search, and determining whether the external electronic device belongs to the same user as that of the electronic device, or is an indoor device. The operation method of the electronic device may include an operation of displaying, based on a result of the determination, a popup display to onboard the external electronic device to a cloud. The operation method of the electronic device may include an operation of identifying a connection type of the external electronic device in response to a user input to the popup display. The operation method of the electronic device may include an operation of determining location information of the external electronic device based on the connection type of the external electronic device.

According to an embodiment, in a non-transitory storage medium storing instructions, the instructions, when executed by at least one processor of an electronic device, may be configured to cause the electronic device to perform at least one operation. The at least one operation may include an operation of searching for an external electronic device via a peripheral device search, and determining whether the external electronic device belongs to the same user as that of the electronic device, or is an indoor device. The at least one operation may include an operation of displaying, based on a result of the determination, a popup display to onboard the external electronic device to a cloud, an operation of identifying a connection type of the external electronic device in response to a user input to the popup display. The at least one operation may include an operation of identifying a connection type of the external electronic device in response to a user input to the popup display. The at least one operation may include an operation of determining location information of the external electronic device based on the connection type of the external electronic device.

### [Brief Description of Drawings]

FIG. 1 is a block diagram schematically illustrating an electronic device in a network environment according to an embodiment of the disclosure;
FIG. 2 is a block diagram of an electronic device according to an embodiment of the disclosure;
FIGS. 3A to 3C illustrate examples in which a device connection UI is displayed in an electronic device;
FIG. 4 is a diagram illustrating a process in which an electronic device onboards an external electronic device;
FIG. 5 is a diagram illustrating a system including an electronic device according to an embodiment of the disclosure;
FIG. 6 is a diagram illustrating a system architecture for describing operation of an electronic device according to an embodiment of the disclosure;
FIG. 7 is a diagram illustrating a configuration of an electronic device according to an embodiment of the disclosure;
FIGS. 8A, 8B, and 8C are flowcharts illustrating a process in which an electronic device configures location information according to an embodiment of the disclosure;
FIG. 9 is a diagram illustrating a process of utilizing information associated with an onboarding failure history according to an embodiment of the disclosure;
FIG. 10 is a diagram illustrating an example of a UI of a location-based device search popup according to an embodiment of the disclosure;
FIG. 11 is a diagram illustrating an example of a UI of a recommendation card according to an embodiment of the disclosure; and
FIG. 12 is a flowchart illustrating operation of an electronic device according to an embodiment of the disclosure.

### [Mode for Carrying out the Invention]

Hereinafter, various embodiments of the disclosure will be described in detail with reference to the accompanying drawings. In describing various embodiments of the disclosure, a detailed description of known functions or configurations incorporated herein will be omitted when it is determined that the description may make the subject matter of various embodiments of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

It should be noted that t he technical terms used herein are only used to describe specific embodiments, and are not intended to limit the disclosure. Alternatively, the technical terms used herein should be interpreted to have the same meaning as those commonly understood by a person skilled in the art to which the disclosure pertains, and should not be interpreted have excessively comprehensive or excessively restricted meanings unless particularly defined as other meanings. Alternatively, when the technical terms used herein are wrong technical terms that cannot correctly represent the idea of the disclosure, it should be appreciated that they are replaced by technical terms correctly understood by those skilled in the art. Alternatively, the general terms used herein should be interpreted as defined in dictionaries or interpreted in the context of the relevant part, and should not be interpreted to have excessively restricted meanings.

Alternatively, a singular expression used herein may include a plural expression unless they are definitely different in the context. As used herein, such an expression as "comprises" or "include" should not be interpreted to necessarily include all elements or all steps described in the specification, and should be interpreted to be allowed to exclude some of them or further include additional elements or steps.

Alternatively, the terms including an ordinal number, such as expressions "a first" and "a second" may be used to described various elements, but the corresponding elements should not be limited by such terms. The above terms are used merely for the purpose of distinguishing one element from other elements. For example, a first element may be termed a second element, and similarly, a second element may be termed a first element without departing from the scope of protection of the disclosure.

It should be understood that when an element is referred to as being "connected" or "coupled" to another element, it may be connected or coupled directly to the other element, or any other element may be interposer between them. Contrarily, in the case where an element is referred to as being "directly connected" or "directly coupled" to any other element, it should be understood that no other element exists therebetween.

Hereinafter, various embodiments of the disclosure will be described in detail with reference to the accompanying drawings. Regardless of drawing signs, the same or like elements are provided with the same reference numeral, and a repeated description thereof will be omitted. Alternatively, in describing the disclosure, descriptions related to technical contents well-known in the art and not associated directly with the disclosure will be omitted. Alternatively, it should be noted that the accompanying drawings are presented merely to help easy understanding of the disclosure, and are not intended to limit the disclosure. The technical idea of the disclosure should be construed to cover all changes, equivalents, and alternatives, in addition to the drawings.

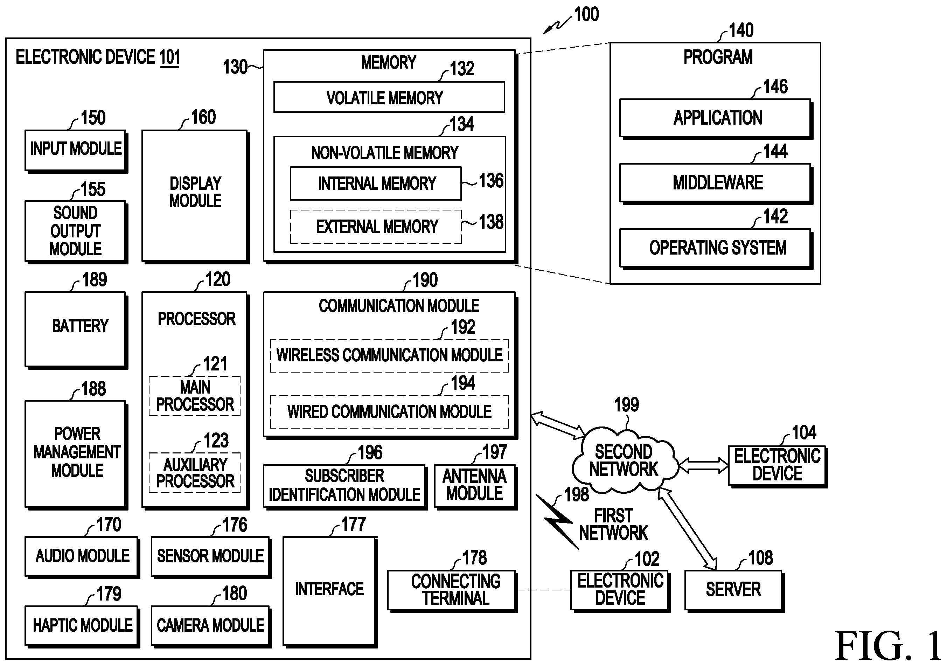

FIG. 1 is a block diagram schematically illustrating an electronic device 101 in a network environment100 according to an embodiment.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

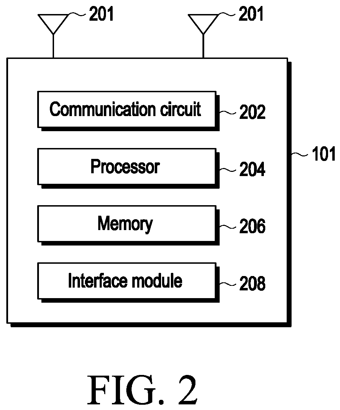

FIG. 2 is a block diagram of the electronic device 101 according to an embodiment of the disclosure.

Referring to FIG. 2, the electronic device 101 may include a communication circuit 202 (e.g., the communication module 190 of FIG. 1) that performs signal transmission or reception with an external electronic device (e.g., electronic device 102 or 104 of FIG. 1), for example, a peer device, by using one or more antennas 201.

The electronic device 101 may include a processor 204 (e.g., the processor 120 of FIG. 1) that may be embodied as one or more single-core processors or one or more multi-core processors, and memory 206 (e.g., memory 130 of FIG. 1) that stores instructions for operation of the electronic device 101.

The electronic device 101 may include an interface module 208 (e.g., the interface 177 of FIG. 1) that provides a wired and/or wireless interface for performing communication with components outside a network. At least some of the one or more antennas 201, the communication circuit 202, or the interface module 208 may be embodied as, for example, at least some of the communication module 190 and the antenna module 198 of FIG. 1. Although FIG. 2 illustrates that the one or more antennas 201 are disposed outside the electronic device 101, this is merely for ease of description, and those skilled in the art may easily understand that the one or more antennas 201 may be located inside a housing that forms the appearance of the electronic device 101 and/or located in at least a portion of the housing and this may be applied to other drawings.

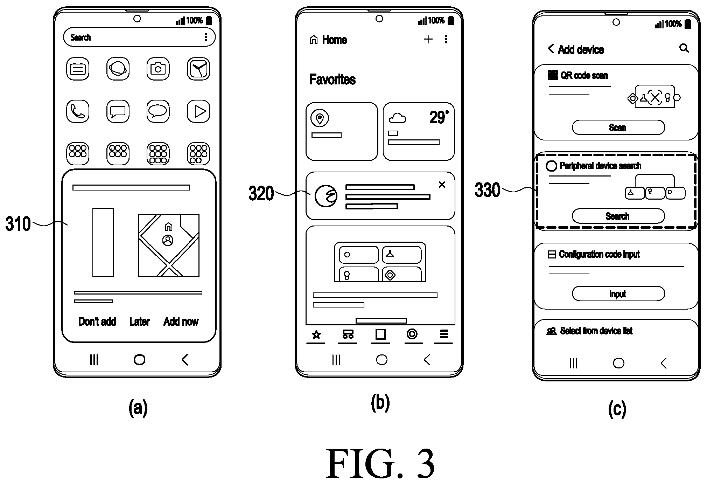

FIGS. 3A to 3C illustrate examples in which a device connection UI is displayed in an electronic device.

In FIG. 3A, the electronic device may display a device connection popup 310 so as to connect (or onboarding) an external electronic device to a cloud. According to an embodiment, the electronic device may display the device connection popup including corresponding external electronic device and location information. According to an embodiment, the device connection popup may include an input button (e.g., Don't add, Later, and/or Add now) associated with whether to immediately connect (or onboard) an external electronic device to the cloud.

In FIG. 3B, the electronic device may display a UI 320 that recommends 3^{rd} party connection associated with an external electronic device. In FIG. 3C, the electronic device may display a UI 330 that automatically recommends a connectable device in an upper portion of a screen so that a user may easily recognize the same when device connection is needed.

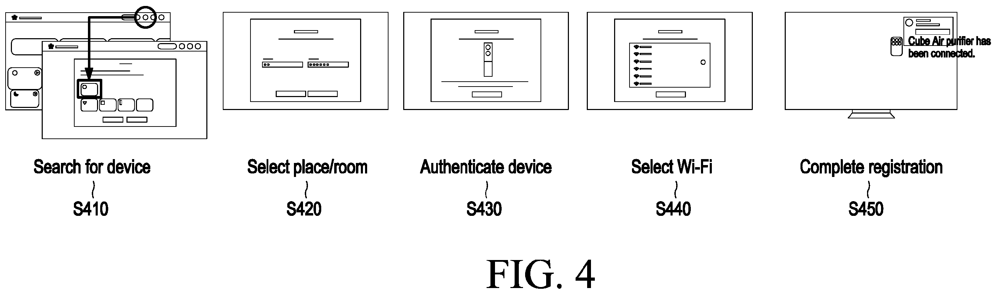

FIG. 4 is a diagram illustrating a process in which an electronic device onboards an external electronic device.

Referring to FIG. 4, in operation S410, in response to a user input, the electronic device may search for and/or select an external electronic device to be onboarded to a cloud. In operation S420, the electronic device may select a location (e.g., place or room) where onboarding is to be performed, in response to a user input. In operation S430, the electronic device may identify whether the external electronic device to be onboarded belongs to the same user as that of the electronic device, and may perform a device authentication procedure in response to a user input. In operation S440, the electronic device may select Wi-Fi in response to a user input. In operation S450, the electronic device may complete a device registration procedure associated with the external electronic device.

In operation FIG. 4, when performing device onboarding associated with the external electronic device, the electronic device may select a location (e.g., place or room) and proceed with a device authentication procedure based on a plurality of user inputs. The electronic device according to an embodiment of the disclosure may automatically perform the location selection (e.g., place or room) and device authentication procedure when performing device onboarding associated with the external electronic device, and may improve a user journey or user experience in association with device onboarding.

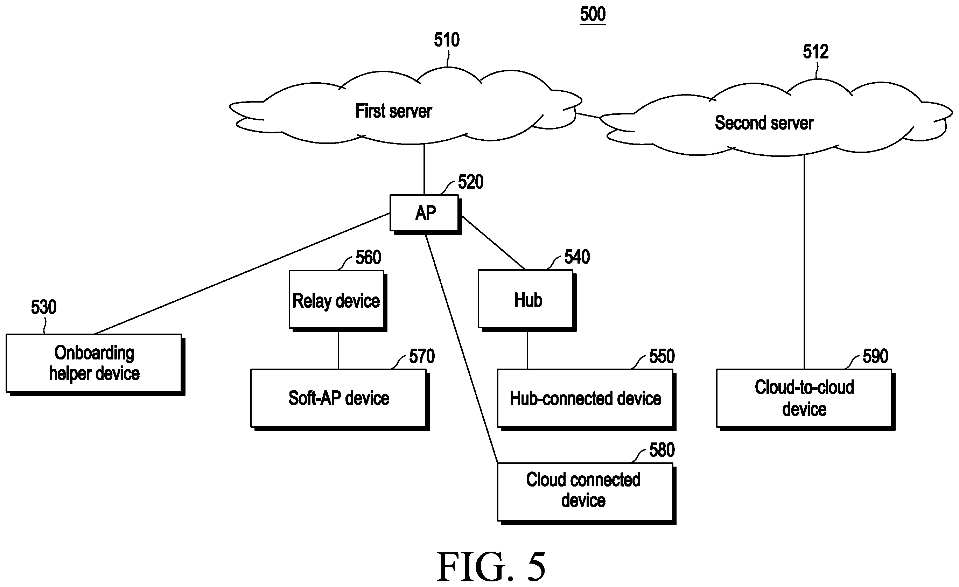

FIG. 5 is a diagram illustrating a system including an electronic device according to an embodiment of the disclosure.

Referring to FIG. 5, a system 500 may include at least one from among a first server 510, a second server 512, an access point (AP) 520, an onboarding helper device 530, a hub 540, a hub-connected device 550, a relay device 560, a soft-ap device 570, a cloud connected device 580, and a cloud-to-cloud device (cloud to cloud device) 590.

The first server 510 may be a server embodied in a first cloud and the second server 512 may be a server embodied in a second cloud. According to an embodiment, the first server 510 and the second server 512 may be embodied in the same cloud. The first server 510 or the second server 512 may be embodied as the server 108 of FIG. 1.

The onboarding helper device 530 may perform control so that an external electronic device is onboarded to a cloud related to the first server 510 and/or second server 512 by using an IoT application (e.g., SmartThings app) installed and/or executed in the device. According to an embodiment, the onboarding helper device 530 may be a device that assists searching for a device to be onboarded from the surroundings via Bluetooth low energy (BLE), software enabled access point (soft-AP), and/or on IP network scanning, and assists automatic onboarding of the retrieved peripheral device. For example, the onboarding helper device 530 may be embodied as a mobile device, a family hub (FHUB), or a TV. The onboarding helper device 530 may be embodied as the electronic device 101 of FIG. 1 or the electronic device 101 of FIG. 2.

According to an embodiment, the IoT application (e.g., SmartThings app) may be a client application that may register an external electronic device to the cloud related to the first server 510 and/or second server 512, and may remotely control the registered external electronic device.

At least one of the hub-connected device 550, the cloud connected device 580, and the cloud-to-cloud device 590 may be connected to the cloud related to the first server 510 and/or second server 512. Each of the hub-connected device 550, the cloud connected device 580, and the cloud-to-cloud device 590 may be embodied as the electronic device 101 of FIG. 1 or the electronic device 101 of FIG. 2.

The hub-connected device 550 may be a device that is connected to the first server 510 by passing through the hub 540 and AP 520 via a communication function such as ZigBee, Z-Wave, or LAN. The cloud connected device 580 may be a device that is directly connected to the AP 520, thereby being connected to the first server 510. The cloud-to-cloud device 590 may be a device that is registered to a third-party cloud and is cloud to cloud connected via an application programming interface (API).

The relay device 560 may relay communication of the soft-ap device 570 that only has a soft-ap without BLE. According to an embodiment, it may be a device that performs Soft-AP scanning, converts the same into a BLE signal, and performs advertising so that the soft-ap device 570 that only has a soft-ap without BLE is capable of being retrieved when the onboarding helper device 530 performs device search via only BLE. According to an embodiment, each of the relay device 560 and the onboarding helper device 530 may be embodied as an independent device. According to an embodiment, the relay device 560 and the onboarding helper device 530 may be the same device. For example, the relay device 560 may be a TV or SmartThings Station. The relay device 560 may be embodied as the electronic device 101 of FIG. 1 or the electronic device 101 of FIG. 2.

The onboarding helper device 530 may determine whether a device retrieved via peripheral device search (BLE, soft-AP, and/or on IP network) is a device belonging to a user and/or is an indoor device. Based on whether the retrieved device is a device belonging to the user and/or is an indoor device, the onboarding helper device 530 may determine whether to display a popup display for onboarding (or registering) the retrieved device to the cloud.

According to an embodiment, the onboarding helper device 530 may display a popup display for onboarding (or registering) the retrieved device to the cloud. According to an embodiment, when the retrieved device is an indoor device, the onboarding helper device 530 may display a popup display for onboarding (or registering) the retrieved device to the cloud. According to an embodiment, when the retrieved device is a device belonging to the user and is an indoor device, the onboarding helper device 530 may display a popup display for onboarding (or registering) the retrieved device to the cloud.

In response to a user input (or onboarding start input) to the popup display in order to onboard (or register) the retrieved device to the cloud, the onboarding helper device 530 may identify a connection type of the retrieved device. The connection type may indicate whether the retrieved device is the hub-connected device 550 or the cloud connected device 580.

According to an embodiment, when the retrieved device is the hub-connected device 550, the onboarding helper device 530 may determine location information (e.g., place and/or room information) of the retrieved device by using location information of the registered hub 540, and may automatically select optimal Wi-Fi information based on the location information of the retrieved device, and may perform an onboarding procedure associated with the retrieved device.

According to an embodiment, when the retrieved device is the cloud connected device 580, the onboarding helper device 530 may determine location information (e.g., place and/or room information) of the retrieved device by using the AP information received by scanning the surroundings and/or geographic (geo) information, and may automatically select optimal Wi-Fi information based on the location information of the retrieved device, and may perform an onboarding procedure associated with the retrieved device.

According to an embodiment, in the case of device search based on a user input value to configuration information for a location-based device search popup, the onboarding helper device 530 may display a popup display for onboarding (or registering) the retrieved device to the cloud based on adjacent AP information and/or geographic (GEO) information. According to an embodiment, the onboarding helper device 530 may display a popup display for onboarding (or registering) the retrieved device to the cloud based on place and/or location information based on a device type of the retrieved device.

According to an embodiment, when onboarding fails, the onboarding helper device 530 may register information related to a cause of the failure with the first server 510, and may use the information related to the cause of the failure when attempting a next onboarding. According to an embodiment, when attempting a next onboarding, the onboarding helper device 530 may use the information used for a previous onboarding attempt (e.g., authentication key, location information, room information, and/or Wi-Fi information).

According to an embodiment, the onboarding helper device 530 may automatically determine and/or recommend Wi-Fi for the retrieved device based on received Wi-Fi signal strength and/or specifications (e.g., authentication type (auth type) and/or band) supported by the retrieved device.

According to an embodiment, the onboarding procedure proposed in the disclosure may be performed according to the following operations (1) to (7). According to an embodiment, the order of the following operations (1) to (7) for onboarding may be variously changed and combined according to a design specification.
(1) The onboarding helper device 530 may determine whether a device retrieved via peripheral device search (BLE, soft-AP, and/or on IP network) is a device belonging to a user and/or is an indoor device, and may determine whether to provide a device connection popup.
(2) The onboarding helper device 530 may utilize previous onboarding information when a history of an onboarding failure exists.
(3) When it is determined to connect the retrieved device to the cloud based on a user input (e.g., Add now) in the device connection popup, the onboarding helper device 530 may automatically select a place/room based on a type of the retrieved device or may display a recommended place/room.
(4) The onboarding helper device 530 may establish a secure channel after making a D2D (BLE, soft-AP, on IP network) connection to the retrieved device.
(5) After establishing the secure channel, the onboarding helper device 530 may perform device authentication to authenticate whether the retrieved device is a device belonging to the user.
(6) The onboarding helper device 530 may authentically select Wi-Fi information to which the retrieved device is connectable, and may transfer the Wi-Fi information to the device.
(7) The device may perform registration with the cloud by using the received Wi-Fi information.
(8) When device registration with the cloud is completed, the onboarding helper device 530 or the device may register the Wi-Fi information and essential information (serial number, Mac address) with the cloud.

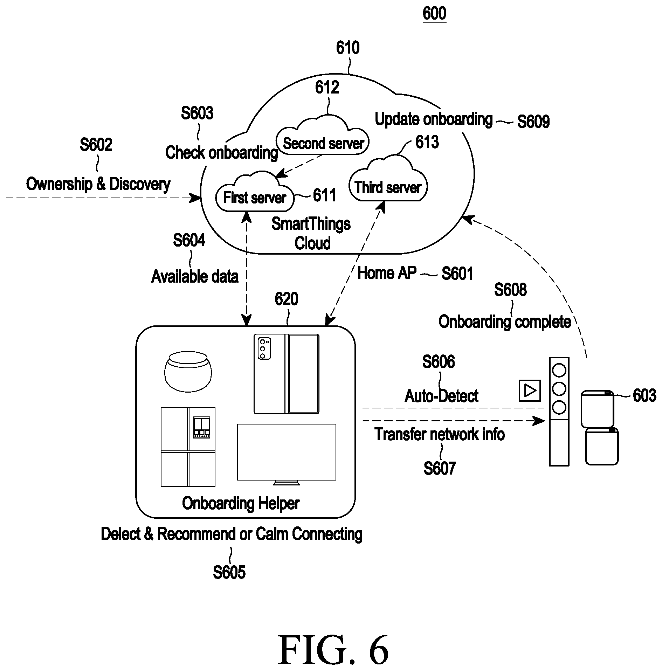

FIG. 6 is a diagram illustrating a system architecture for describing operation of an electronic device according to an embodiment of the disclosure.

Referring to FIG. 6, a system 600 may include a cloud 610, an onboarding helper device 620, and an external electronic device 630. The onboarding helper device 620 may be embodied as the electronic device 101 of FIG. 1 or FIG. 2, and the external electronic device 630 may be embodied as the electronic device 102 and/or 104 of FIG. 1.

The cloud 610 may be a cloud (e.g., SmartThings cloud) for IoT. The cloud 610 may include a first server 611, a second server 612, and a third server 613. According to an embodiment, the first server 611 may provide purchase/genuine product registration, and/or peripheral device search information associated with the onboarding helper device 620 and/or external electronic device 630. For example, the first server 611 may manage and/or provide at least one from among account information, location information (e.g., location/room), AP information (e.g., home AP), a basic service set identifier (BSSID), a model code, and a serial number (SN). According to an embodiment, based on account and/or serial number (SN) associated with the onboarding helper device 620 and/or external electronic device 630, the second server 612 may identify whether a corresponding device is onboarded. According to an embodiment, the third server 613 may perform a Wi-Fi locker function, and may manage and/or provide a Wi-Fi AP service set identifier (AP SSID) and/or password.

In operation S601, the onboarding helper device 620 may identify and/or obtain home AP information provided from the third server 613 in the cloud 610. In operation S602, the first server 611 in the cloud 610 may identify and/or perform ownership and/or discovery in association with a customer and product (customer & product) (e.g., onboarding helper device 620 or external electronic device 630). In operation S603, the second server 612 in the cloud 610 may identify whether the onboarding helper device 620 is onboarded. In operation S604, the first server 611 in the cloud 610 may perform data transmission and/or reception with the onboarding helper device 620.

In operation S605, the onboarding helper device 620 may perform detection (detect) and/or recommendation (recommend) for calm connecting. The onboarding helper device 620 may perform automatic detection (auto detect) with respect to the external electronic device 630 in operation S606, and the onboarding helper device 620 may transmit network information to the external electronic device 630 in operation S607 so that the external electronic device 630 is onboarded to the cloud 610. In operation S608, the external electronic device 630 may complete an onboarding procedure with respect to the cloud 610, based on the network information received from the onboarding helper device 620. In operation S609, the second server 612 in the cloud 610 may identify and/or update the fact that the external electronic device 630 is onboarded to the cloud 610.

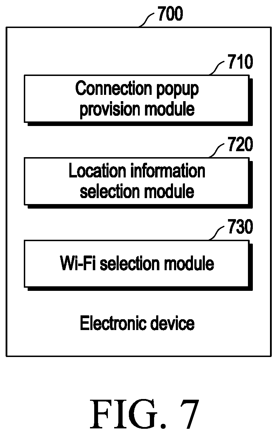

FIG. 7 is a diagram illustrating a configuration of an electronic device according to an embodiment of the disclosure.

Referring to FIG. 7, an electronic device 700 may include a connection popup provision module 710, a location information selection module 720, and a Wi-Fi selection module 730. The electronic device 700 may be embodied as the electronic device 101 of FIG. 1, the electronic device 101 of FIG. 2, the onboarding helper device 530 of FIG. 5, or the onboarding helper device 620 of FIG. 6.

The connection popup provision module 710 may determine whether a retrieved device belongs to a user or is an indoor device, and may provide a connection popup based on a result of the determination.

According to an embodiment, a device (e.g., TV, family hub) used in a fixed location may search for a peripheral device, and may share at least one of a searched place, a device type, and device ID information via a cloud. According to an embodiment, all electronic devices of the same account do not provide device-based popups but may provide a UI in the form of a recommended device list. According to an embodiment, information on a history of onboarding performed in a predetermined electronic device (e.g., user's history of input of Don't Add/Later/Add now in association with an external electronic device) and onboarding result information (e.g., onboarding success/failure history) may be stored in the cloud, and the connection popup provision module 710 may utilize the onboarding history information and/or the onboarding result information when performing a new onboarding procedure, so as to mitigate a frequent provision of a connection popup.

According to an embodiment, the connection popup provision module 710 may determine whether an external electronic device is a device belonging to the user by using purchase/genuine product registration information provided from a server (e.g., first server 611 of FIG. 6). According to an embodiment, based on account or SN information of an inception server (e.g., second server 612 of FIG. 6), the connection popup provision module 710 may determine whether an external electronic device is onboarded.

According to an embodiment, in the case of a softAP device, when an SSID is included in purchase/genuine product registration information in a server (e.g., first server 611 of FIG. 6), the connection popup provision module 710 may determine that the softAP device is a device belonging to the user. According to an embodiment, in the case of a BLE device, when SN information in a BLE packet is included in the purchase/genuine product registration information in a server (e.g., the first server 611 of FIG. 6), the connection popup provision module 710 may determine that the BLE device is a device belonging to the user.

According to an embodiment, the connection popup provision module 710 may obtain purchase/genuine product information from a server (e.g., the first server 611 of FIG. 6), and may determine whether a retrieved device is a device belonging to the user. For example, the connection popup provision module 710 may determine whether the retrieved device belongs to the user based on a serial number. According to an embodiment, the connection popup provision module 710 may obtain account and/or SN information from a server (e.g., the second server 612 of FIG. 6), and may determine whether the retrieved device is onboarded based on the obtained information.

The location information selection module 720 may determine a location (or location information) for which a retrieved device is to be registered. According to an embodiment, whether to display a device connection popup for a location designated for a search popup may be identified. According to an embodiment, a connection popup may be displayed according to information on whether to display a popup in a server. According to an embodiment, a user input may select Don't Add, Later, or Add Now in a connection popup, and when the user selects Add Now, onboarding begins and the server may be updated with information on whether to display a popup. When the user selects Don't Add or Later, a connection popup may not be provided in the same account. According to an embodiment, when the user selects Later, the connection popup provision module 710 may provide a connection popup after a predetermined period of time elapses. For example, the predetermined period of time may be configured and/or selected by the user, or may be configured to a default time (e.g., 24 hours).

According to an embodiment, the connection popup provision module 710 may provide a connection popup according to a mobile location-based condition or whether to provide a location-based device search popup.

According to an embodiment, the connection popup provision module 710 may provide a device search popup associated with an electronic device, when 1) the electronic device 700 is located within a configured radius (e.g., within a radius of 150 m) of a predetermined location (e.g., SmartThings location), 2) location information for all places are configured, and 3) the electronic device 700, used as a stationary device in a predetermined location, is subject to provision.

According to an embodiment, the connection popup provision module 710 may provide a device search popup only for a location designated by the user for a device search popup. According to an embodiment, in a predetermined menu, a configuration input associated with provision of a location-based device search popup to the user may be provided. According to an embodiment, when a peripheral device is retrieved, the electronic device 700 may estimate the current location by using AP information in surroundings and utilizable geographic (geo) information, and may determine, based on the same, whether to provide a popup. According to an embodiment, the electronic device 700 may identify whether an AP that is already used for registration of another device exists among AP information obtained scanning the surroundings. According to an embodiment, the electronic device 700 may identify whether the user is located within a configured location area (e.g., geo fence) by using geographic (geo) information identified by the electronic device 700 itself and/or geographic information obtained via an IP address of an adjacent AP.

The location information selection module 720 may automatically select a place and/or room. According to an embodiment, when a retrieved device is a cloud connected device, the location information selection module 720 may automatically configure location information by using AP information and/or geo information. According to an embodiment, the location information selection module 720 may compare AP information obtained by scanning the surroundings and AP information previously used for device registration. According to an embodiment, the location information selection module 720 may compare at least two from among geo information obtained using GPS and network information, geo information obtained using IP information of an adjacent AP, and geo information configured by the user for a location.

According to an embodiment, when a retrieved device is a hub connected device, selecting a hub that actually supports a corresponding protocol may be more important than selecting a logical place distinguished by an application. According to an embodiment, the location information selection module 720 may select a hub that supports a protocol (e.g., ZigBee, Z-Wave, or Matter) of IoT things and is in an active state. According to an embodiment, the location information selection module 720 may select a location first, and may select a hub that supports a protocol of a thing in the corresponding location and is in an active state.

According to an embodiment, when only one hub that supports a protocol of things and is active exists for the account, the location information selection module 720 may select the corresponding hub. According to an embodiment, the location information selection module 720 may select a location based on AP information, and may identify whether a hub that supports a protocol of things in the corresponding location and is active exists. According to an embodiment, the location information selection module 720 may select a location based on geo information, and may identify whether a hub that supports a protocol of things in the corresponding location and is active exists. According to an embodiment, when one hub that supports a protocol of things and is active exists, the location information selection module 720 may select the corresponding hub, and the location/room of the things may be configured to correspond to the location/room of the selected hub. According to an embodiment, when two or more hubs that satisfy the conditions exist, the location information selection module 720 may select a hub that has more connections with things.

The Wi-Fi selection module 730 may automatically select Wi-Fi. According to an embodiment, the Wi-Fi selection module 730 may automatically select an AP to use, when a signal strength of an AP that is subject to automatic connection to the device is greater than or equal to a predetermined signal strength in order to ensure reliability of connection with the device, and satisfies specifications (auth type/band) supported by the device.

According to an embodiment, based on the following priority order, the Wi-Fi selection module 730 may automatically select an AP to use.
1. An AP being used by the electronic device 700 that supports device registration via automatic Wi-Fi selection.
2. An AP that is most recently updated among AP information being used by a device in a cloud.
3. An AP that has a strongest signal strength among AP information collectable by the electronic device 700 or cloud.

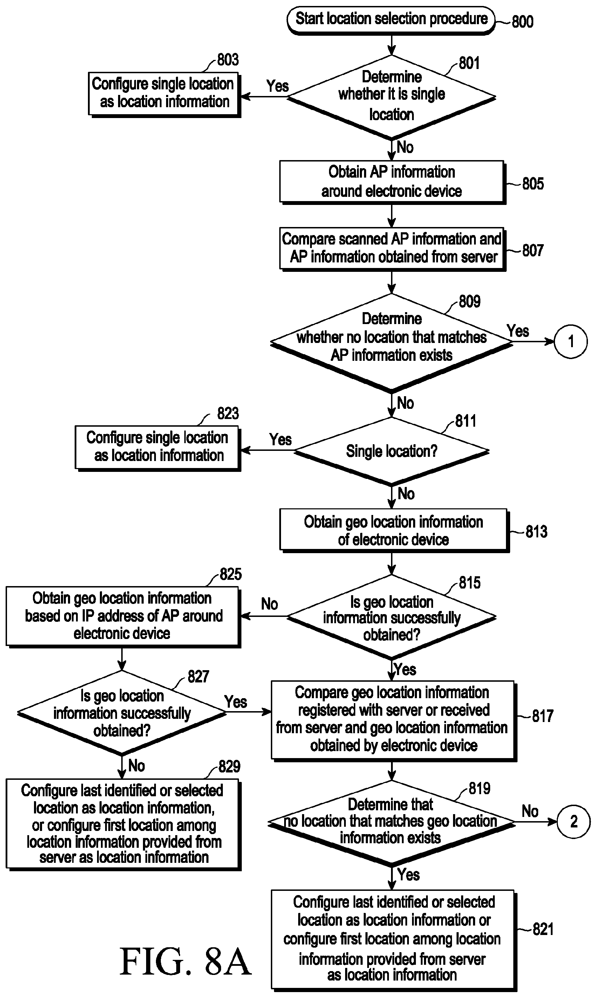

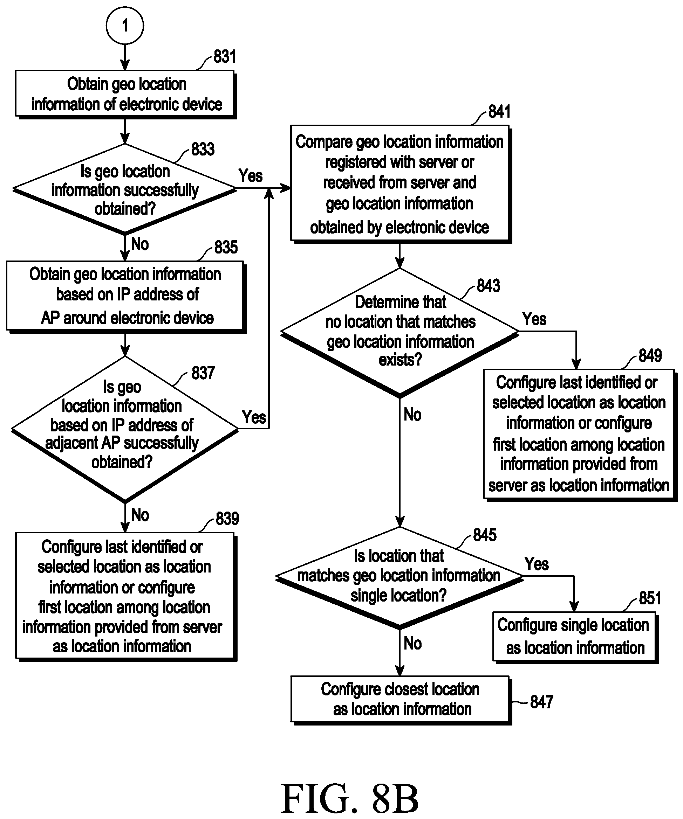

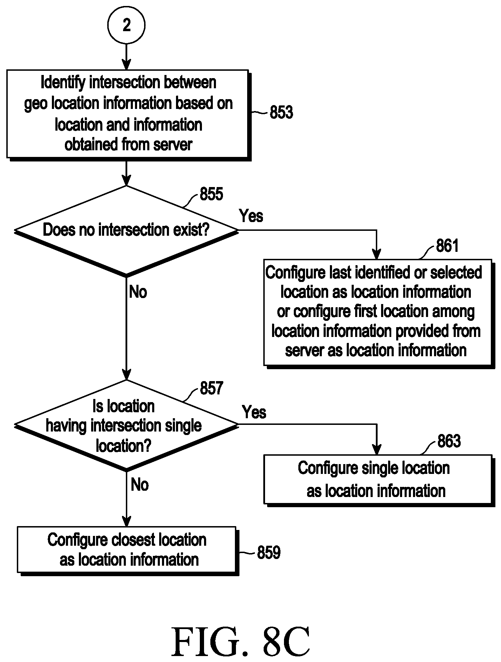

FIGS. 8A, 8B, and 8C are flowcharts illustrating a process in which an electronic device configures location information according to an embodiment of the disclosure.

An electronic device that performs logic written in FIGS. 8A, 8B, and 8C may be embodied as the onboarding helper device 530 of FIG. 5 or the onboarding helper device 620 of FIG. 6. Based on information received from a server (e.g., first server 510 of FIG. 5, second server 512 of FIG. 5, first server 611 of FIG. 6, second server 612 of FIG. 6, and/or third server 613 of FIG. 6), the electronic device may configure location information where onboarding of an external electronic device is to be performed.

Referring to FIG. 8A, in operation 800, the electronic device may start a location selection procedure. In operation 801, the electronic device may determine whether a location (e.g., home or office) configured by a user in an application is a single location. When a result of the determination in operation 801 indicates that the location configured by the user in the application is a single location (Yes in operation 801), the electronic device may configure the single location as location information in operation 803. When the result of the determination in operation 801 indicates that the location configured by the user in the application is not a single location (No in operation 801), the electronic device may obtain (or scan) AP information around the electronic device in operation 805. In operation 807, the electronic device may compare the scanned AP information and AP information obtained from a server (e.g., the third server 613 of FIG. 6).

In operation 809, the electronic device may determine whether no location that matches the AP information exists based on a result of the comparison in operation 807. When a result of the determination in operation 809 indicates that a location that matches the AP information exists, the electronic device may determine whether the location that matches the AP information among locations configured by the user in the application is a single location in operation 811. When a result of the determination in operation 811 indicates that the location that matches the AP information among the locations configured by the user in the application is not a single location, the electronic device may obtain geographic location (geo location) information of the electronic device in operation 813. When the electronic device successfully obtains the geo location information in operation 815, the electronic device may compare geo location information registered with a server or received from a server and the geo location information obtained by the electronic device in operation 817. When the electronic device determines that no location that matches the geo location information exists in operation 819, the electronic device may configure, as location information, a location that the user identifies or selects last in the application, or may configure, as location information, a first location among pieces of location information received from the server in operation 821.

When the result of the determination indicates that the location that matches the AP information among the locations configured by the user in the application is a single location in operation 811, the electronic device may configure the single location as location information in operation 823. When the electronic device does not successfully obtain geo location information in operation 815, the electronic device may obtain geo location information based on an IP address of an adjacent AP in operation 825. When the electronic device successfully obtains the geo location information based on the IP address of the adjacent AP in operation 827, the electronic device may compare geo location information registered with the server or received from the server and the geo location information obtained by the electronic device in operation 817. When the electronic device does not successfully obtain the geo location information based on the IP address of the adjacent AP in operation 827, the electronic device may configure, as location information, a location that the user identifies or selects last in the application, or may configure, as location information, a first location among pieces of location information received from the server in operation 829.

Referring to FIG. 8A and FIG. 8B, when the result of determination in operation 809 indicates that no location that matches the AP information exists, the electronic device may obtain geo location information of the electronic device in operation 831. When the electronic device does not successfully obtain the geo location information in operation 833, the electronic device may obtain geo location information based on an IP address of an adjacent AP in operation 835. When the electronic device successfully obtains the geo location information based on the IP address of the adjacent AP in operation 837, the electronic device may compare the geo location information registered with the server or received from the server and the geo location information obtained by the electronic device in operation 841. When the electronic device does not successfully obtain the geo location information based on the IP address of the adjacent AP in operation 837, the electronic device may configure, as location information, a location that the user identifies or selects last in the application, or may configure, as location information, a first location among pieces of location information received from the server in operation 839.

When the electronic device successfully obtains the geo location information in operation 833, the electronic device may compare the geo location information registered with the server or received from the server and the geo location information obtained by the electronic device in operation 841. When the electronic device determines that no location that matches the geo location information exists in operation 843, the electronic device may configure, as location information, a location that the user identifies or selects last in the application, or may configure, as location information, a first location among pieces of location information received from the server in operation 849.

When the electronic device determines that a location that matches the geo location information exists in operation 843, the electronic device may determine whether the location that matches the geo location information among the locations configured by the user in the application is a single location in operation 845. When the result of the determination indicates that the location that matches the geo location information among the locations configured by the user in the application is not a single location in operation 845, the electronic device may configure a closest location as location information in operation 847. When the result of the determination indicates that the location that matches the geo location information among the locations configured by the user in the application is a single location in operation 845, the electronic device may configure the single location as location information in operation 851.

Referring to FIG. 8A and FIG. 8C, when the electronic device determines that a location that matches the geo location information exists in operation 819, the electronic device may identify an intersection between the geo location information based on the location and the information obtained from the server (third server 613 of FIG. 6) in operation 853. When the electronic device determines that an intersection between the geo location information based on the location and the information obtained from the server (third sever 613 of FIG. 6) exists in operation 855, the electronic device may determine whether the location that has the intersection among the locations configured by the user in the application is a single location in operation 857. When a result of the determination in operation 857 shows that the location that has the intersection among the locations configured by the user in the application is not a single location, the electronic device may configure a closest location as location information in operation 859. When the result of the determination indicates that the location that has the intersection among the locations configured by the user in the application is a single location in operation 857, the electronic device may configure the single location as location information in operation 863. When the electronic device determines that no intersection between the geo location information based on the location and the information obtained from the server (third sever 613 of FIG. 6) exists in operation 855, the electronic device may configure, as location information, a location that the user identifies or selects last in the application, or may configure, as location information, a first location among pieces of location information provided from the server in operation 861.

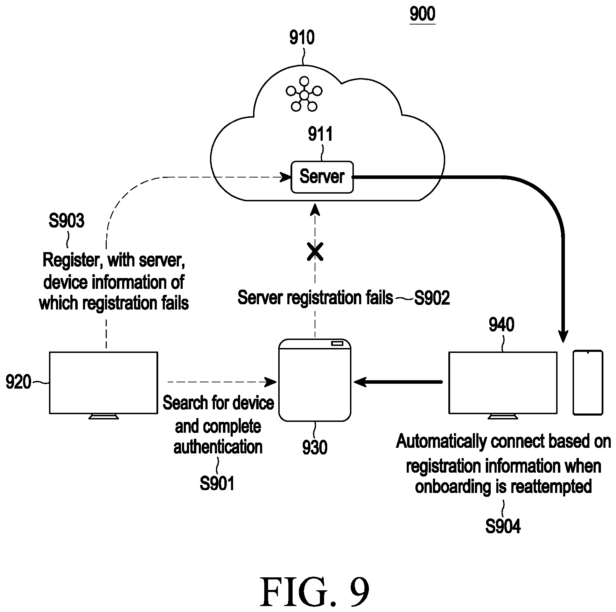

FIG. 9 is a diagram illustrating a process of utilizing information associated with an onboarding failure history according to an embodiment of the disclosure.

Referring to FIG. 9, a system 900 may include a cloud 910 in which a server 911 is embodied, a first electronic device 920, a second electronic device 930, and a third electronic device 940.

In operation S901, the first electronic device 920 may perform device search and complete authentication in association with the second electronic device 930. The first electronic device 920 may support onboarding of the second electronic device 930 to the cloud 910. In operation S902, the second electronic device 930 may fail to register with the server 911 in the cloud 910. In operation S903, the first electronic device 920 may register, with the server 911, device information associated with the second electronic device 930 that fails registration. In operation S904, when the third electronic device 940 supports a reattempt of onboarding of the second electronic device 930 to the cloud 910, the third electronic device 940 and the second electronic device 930 may be automatically connected (automatic connection based on registration information) by using failure information (or device information) associated with the second electronic device 930 registered with the server 911. According to an embodiment, the second electronic device 930 may simplify an onboarding procedure by using failure information (or device information) associated with the second electronic device 930 registered with the sever 911.

According to an embodiment, in the device registration process, after the authentication between the first electronic device 920 and the second electronic device 930 is completed, the first electronic device 920 may obtain a unique device value of and the second electronic device 930, and may simplify a next onboarding procedure using the same. A history of a previous onboarding failure may be obtained and thus the second electronic device 930 may improve an onboarding success rate.

According to an embodiment, since the device authentication between the first electronic device 920 and the second electronic device 930 is performed once, key information that is capable of performing an authentication procedure automatically for a next attempt may be obtained, and an authentication procedure for a next onboarding attempt may be simplified. According to an embodiment, information associated with the second electronic device 930 for which onboarding has been previously performed may be identified and thus, place/location information of the second electronic device 930 may be obtained (utilized for automatic place configuration). According to an embodiment, a cause of a failure of the previous onboarding of the second electronic device 930 may be stored in the server 911 so that a user may be guided to take measures using the same or may utilize the same for a next onboarding.

According to an embodiment, when an onboarding attempt using a predetermined AP fails, the corresponding AP may be excluded from logic that automatically selects an AP. According to an embodiment, when an onboarding attempt using a predetermined AP fails due to a password error or an abnormal state of the AP, the corresponding reason of the error may be exposed to the user (via a device having an output function) so as to cause the user to take measures.

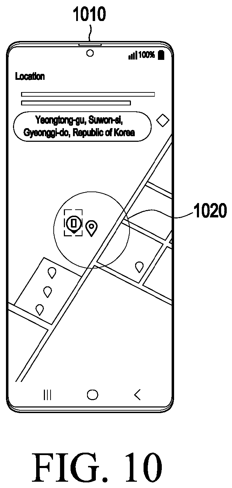

FIG. 10 is a diagram illustrating an example of a UI of a location-based device search popup according to an embodiment of the disclosure.

Referring to FIG. 10, an electronic device may display a location-based device search popup 1010. According to an embodiment, when an electronic device is located within a configured radius (e.g., within a radius of 150m) of a predetermined area 1020, the electronic device may display the location-based device search popup 1010. According to an embodiment, when a location-based device search popup is allowed, the electronic device may search for a device and may provide a connection popup.

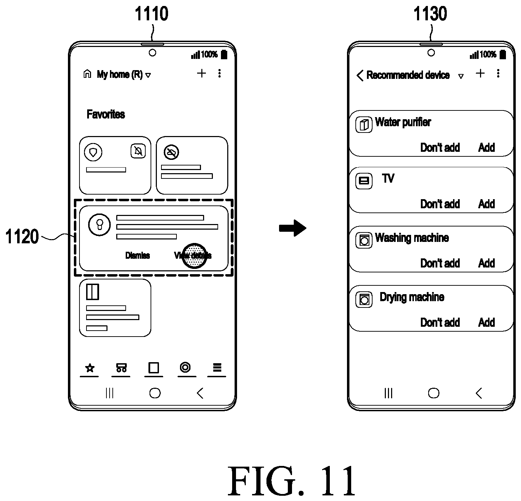

FIG. 11 is a diagram illustrating an example of a UI of a recommendation card according to an embodiment of the disclosure.

Referring to FIG. 11, the electronic device may display a screen 1110 including a recommendation card 1120 indicating that a device connectable to a cloud exists. The electronic device may display a screen 1130 providing a plurality of recommended device lists in response to a user input (e.g., click on view details) that requests detailed information associated with the recommendation card 1120. According to an embodiment, when a device belongs to the user but a location-based device search popup is not allowed, the electronic device may display a recommendation card and/or a recommended device list. According to an embodiment, the electronic device may display a recommendation card and/or a recommended device list after providing a connection popup to the user.

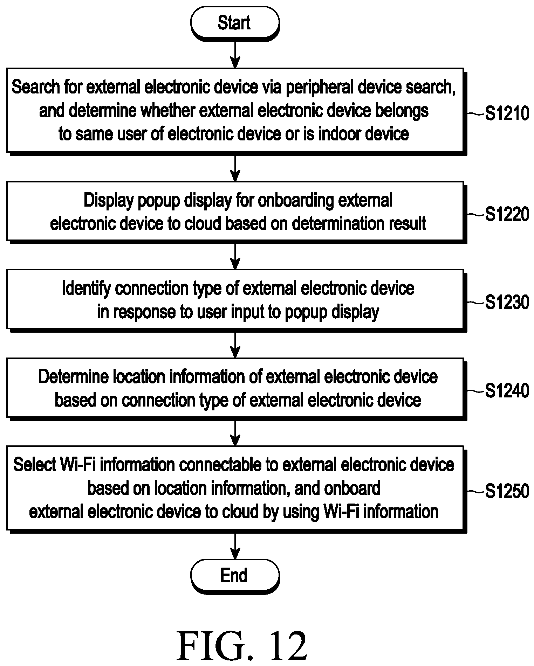

FIG. 12 is a flowchart illustrating operation of an electronic device according to an embodiment of the disclosure.

In FIG. 12, the electronic device may be embodied as the electronic device 101 of FIG. 1, the electronic device 101 of FIG. 2, the onboarding helper device 530 of FIG. 5, the onboarding helper device 620 of FIG. 6, or the electronic device 700 of FIG. 7.

Referring to FIG. 12, in operation S1210, the electronic device may search for an external electronic device via a peripheral device search, and may determine whether the external electronic device belongs to the same user as that of the electronic device or is an indoor device. In operation S1220, based on a result of the determination, the electronic device may display a popup display for onboarding the external electronic device to a cloud. In operation S1230, in response to a user input to the popup display, the electronic device may identify a connection type of the external electronic device. In operation S1240, based on the connection type of the external electronic device, the electronic device may determine location information of the external electronic device. In operation S1250, the electronic device may select, based on the location information, Wi-Fi information connectable to the external electronic device, and may perform control so as to onboard the external electronic device to the cloud by using the Wi-Fi information.

According to an embodiment, an operation method of the electronic device may include an operation of selecting, based on the location information, Wi-Fi information that is connectable to the external electronic device. According to an embodiment, the operation method of the electronic device may include an operation of performing control so that the external electronic device is registered with the cloud by using the Wi-Fi information.

According to an embodiment, based on the connection type of the external electronic device, the external electronic device may be a hub-connected device or a cloud connected device. According to an embodiment, the operation method of the electronic device may further include an operation of searching for a peripheral device based on Bluetooth low energy (BLE), a software enabled access point (soft-AP), or an on IP network.

According to an embodiment, the operation method of the electronic device may include an operation of displaying the popup display to onboard the external electronic device to the cloud when the determination indicates that the external electronic device belongs to the same user as that of the electronic device. According to an embodiment, the operation method of the electronic device may include an operation of displaying the popup display to onboard the external electronic device to the cloud when the determination indicates that the external electronic device is the indoor device.

According to an embodiment, the operation method of the electronic device may further include an operation of determining the location information of the external electronic device by using location information of a hub connected to the external electronic device when the external electronic device is the hub-connected device. According to an embodiment, the operation method of the electronic device may further include an operation of determining the location information of the external electronic device by using at least one of AP information obtained by scanning surroundings and geographic information when the external electronic device is the cloud connected device.

According to an embodiment, the operation method of the electronic device may further include an operation of registering information related to an onboarding failure with a server in the cloud. According to an embodiment, the operation method of the electronic device may further include an operation of determining a Wi-Fi to be connected to the external electronic device based on a received Wi-Fi reception strength and specifications supported by the external electronic device.

According to an embodiment, in a non-transitory storage medium storing instructions, the instructions, when executed by at least one processor of an electronic device, may be configured to cause the electronic device to perform at least one operation. The at least one operation may include an operation of searching for an external electronic device via a peripheral device search, and determining whether the external electronic device belongs to the same user as that of the electronic device, or is an indoor device. The at least one operation may include an operation of displaying, based on a result of the determination, a popup display to onboard the external electronic device to a cloud. The at least one operation may include an operation of identifying a connection type of the external electronic device in response to a user input to the popup display. The at least one operation may include an operation of determining location information of the external electronic device based on the connection type of the external electronic device.

## Claims

1. An electronic device (101 of FIG. 1, 101 of FIG. 2, 530 of FIG. 5, 620 of FIG. 6, 700 of FIG. 7) comprising:
a communication circuit (190 of FIG. 1, 202 of FIG. 2);
a processor (120 of FIG. 1, 204 of FIG. 2); and
memory (130 of FIG. 1, 206 of FIG. 2),
wherein the memory (130 of FIG. 1, 206 of FIG. 2) stores instructions which, when executed by the processor (120 of FIG. 1, 204 of FIG. 2), cause the electronic device (101 of FIG. 1, 101 of FIG. 2, 530 of FIG. 5, 620 of FIG. 6, 700 of FIG. 7) to:
search for an external electronic device via a peripheral device search, and determine whether the external electronic device belongs to the same user as that of the electronic device, or is an indoor device;
based on a result of the determination, display a popup display to onboard the external electronic device to a cloud;
identify a connection type of the external electronic device in response to a user input to the popup display; and
determine location information of the external electronic device based on the connection type of the external electronic device.

2. The electronic device of claim 1, wherein the electronic device is configured to:
based on the location information, select Wi-Fi information that is connectable to the external electronic device; and
perform control so that the external electronic device is registered with the cloud by using the Wi-Fi information.

3. The electronic device of any one of claims 1 and 2, wherein, based on the connection type of the external electronic device, the external electronic device is a hub-connected device or a cloud connected device.

4. The electronic device of any one of claims 1 to 3, wherein the electronic device is configured to search for a peripheral device based on Bluetooth low energy (BLE), a software enabled access point (soft-AP), or an on IP network.

5. The electronic device of any one of claims 1 to 4, wherein the electronic device is configured to:
when the determination indicates that the external electronic device belongs to the same user as that of the electronic device, display the popup display to onboard the external electronic device to the cloud; or
when the determination indicates that the external electronic device is the indoor device, display the popup display to onboard the external electronic device to the cloud.

6. The electronic device of any one of claims 1 to 5, wherein, when the external electronic device is the hub-connected device, the electronic device determines the location information of the external electronic device by using location information of a hub connected to the external electronic device.

7. The electronic device of any one of claims 1 to 6, wherein, when the external electronic device is the cloud connected device, the electronic device determines the location information of the external electronic device by using at least one of AP information obtained by scanning surroundings and geographic information.

8. The electronic device of any one of claims 1 to 7, wherein, when the external electronic device fails to be onboarded to the cloud, the electronic device registers information related to the onboarding failure with a server in the cloud.

9. The electronic device of any one of claims 1 to 8, wherein the electronic device is configured to determine a Wi-Fi to be connected to the external electronic device based on a received Wi-Fi reception strength and specifications supported by the external electronic device.

10. An operation method of an electronic device (101 of FIG. 1, 101 of FIG. 2, 530 of FIG. 5, 620 of FIG. 6, 700 of FIG. 7), the method comprising:
searching for an external electronic device via a peripheral device search, and determining whether the external electronic device belongs to the same user as that of the electronic device, or is an indoor device;
displaying, based on a result of the determination, a popup display to onboard the external electronic device to a cloud;
identifying a connection type of the external electronic device in response to a user input to the popup display; and
determining location information of the external electronic device based on the connection type of the external electronic device.

11. The method of claim 10, further comprising:
selecting, based on the location information, Wi-Fi information that is connectable to the external electronic device; and
performing control so that the external electronic device is registered with the cloud by using the Wi-Fi information.

12. The method of any one of claims 10 and 11, wherein, based on the connection type of the external electronic device, the external electronic device is a hub-connected device or a cloud connected device.

13. The method of any one of claims 10 to 12, further comprising searching for a peripheral device based on Bluetooth low energy (BLE), a software enabled access point (soft-AP), or an on IP network.

14. The method of any one of claims 10 to 13, further comprising:
when the determination indicates that the external electronic device belongs to the same user as that of the electronic device, displaying the popup display to onboard the external electronic device to the cloud; or
when the determination indicates that the external electronic device is the indoor device, displaying the popup display to onboard the external electronic device to the cloud.

15. A non-transitory storage medium storing instructions which, when executed by at least one processor of an electronic device, are configured to cause the electronic device to perform at least one operation, the at least one operation comprising:
searching for an external electronic device via a peripheral device search, and determining whether the external electronic device belongs to the same user as that of the electronic device, or is an indoor device;
displaying, based on a result of the determination, a popup display to onboard the external electronic device to a cloud;
identifying a connection type of the external electronic device in response to a user input to the popup display; and
determining location information of the external electronic device based on the connection type of the external electronic device.
